# FASCICULE DE BREVET EUROPEEN

(11) **EP 0 595 684 B1**
(45) Date de publication et mention de la délivrance du brevet: **27.11.1996**
(21) Numéro de dépôt: 93402562.8
(22) Date de dépôt: 19.10.1993
(51) Int. Cl.: B60K 17/08

(54) **Ensemble de transmission transversal à déport axial**
Quer angeordnete Kraftübertragungsanordnung mit axialem Versatz
Transverse drive train assembly with axial offset

(30) Priorité: 30.10.1992 FR 9213007
(43) Date de publication de la demande: 04.05.1994
(73) Titulaire: REGIE NATIONALE DES USINES RENAULT S.A., 92109 Boulogne Billancourt Cédex (FR)
(72) Inventeur: Valentin, Daniel, F-92500 Rueil-Malmaison (FR)

(56) Documents cités:
- DE-A- 3 413 818
- DE-A- 3 736 838
- DE-A- 4 027 901
- FR-A- 2 670 856
- US-A- 4 658 661

## Description

La présente invention concerne un ensemble de transmission transversal pour véhicule, notamment pour véhicule automobile. Plus précisément, elle a pour objet un ensemble de transmission transversal, selon lequel le mécanisme de changement de vitesse n'est pas monté directement sur l'axe du vilebrequin, mais est déporté axialement par rapport à celui-ci, grâce à des organes mécaniques de transfert assurant la "descente" du mouvement de l'axe de sortie du moteur, sur l'arbre d'entrée de la boîte de vitesses.

La motorisation transversale s'est aujourd'hui imposée sur la plupart des véhicules, y compris sur les véhicules de grosse cylindrée. Lorsque les moteurs concernés sont volumineux, leur implantation et celle des principaux organes de transmission, dont l'embrayage, le mécanisme de changement de vitesse et le pont avant, dans le compartiment moteur, pose des problèmes d'encombrement n'existant pas avec des moteurs de taille plus réduite. La disposition classique, consistant à monter l'embrayage et le mécanisme de changement de vitesses "en bout" du moteur, conformément à la publication FR 2 378 647 de la demanderesse, peut alors s'avérer difficile, voire impossible à mettre en oeuvre, notamment avec des moteurs à cinq ou six cylindres, qui occupent pratiquement toute la largeur du compartiment moteur.

Pour réduire la largeur totale du groupe moto-propulseur, il a déjà été proposé de déporter le mécanisme de changement de vitesses par rapport à l'axe de sortie du moteur. Cette disposition, illustrée par la publication FR 2 380 156, dans le cas d'un groupe moto-propulseur longitudinal, est généralement mise en oeuvre par une descente d'engrenages, se présentant sous la forme d'une paire de roues dentées, dont l'engrenage assure le transfert du mouvement de l'arbre mené de l'embrayage, sur l'arbre d'entrée de la boîte de vitesses. Une telle "descente" du mouvement, bien que satisfaisante du point de vue cinématique, présente l'inconvénient d'introduire dans la transmission un engrenage supplémentaire, travaillant sur tous ses rapports, donc entraînant en permanence une perte de rendement global de celle-ci.

On connaît par ailleurs des dispositifs d'amortissement des oscillations dans une ligne de transmission, appelés "double volant amortisseur" (DVA), tels que celui qui est décrit dans la publication FR 2670 856. L'objectif d'un DVA est d'augmenter le confort du véhicule. Ce dispositif est constitué de deux masses reliées élastiquement entre elles, la première étant solidaire en rotation du moteur, tandis que la seconde est solidaire de l'embrayage et de la boîte de vitesses. La liberté de mouvement entre ces deux masses, contrôlée par un élément élastique comprenant un ressort et un amortisseur, permet dans une large mesure de filtrer les vibrations engendrées par les acyclismes du moteur, particulièrement sensibles aux faibles régimes. Grâce au DVA ces vibrations ne seront pas transmises à l'habitacle et aux occupants du véhicule par l'intermédiaire de la ligne de transmission et du châssis.

Comme indiqué plus haut, l'implantation d'un DVA sur une ligne de transmission nécessite la présence de deux masses de part et d'autre d'un l'élément élastique. Dans certains cas, Il peut être nécessaire d'introduire dans la ligne de transmission des masses additionnelles de part et d'autre de l'élément élastique. On comprendra qu'il est préférable de placer les masses additionnelles avant l'embrayage plutôt qu'après celui-ci, dans la chaîne cinématique de la transmission, afin de ne pas augmenter la masse d'inertie totale qui est couplée ou découplée du moteur à chaque manoeuvre de changement de vitesse. Cette considération ne doit pas être négligée lorsqu'on cherche à implanter un DVA dans un ensemble de transmission, car une augmentation excessive de la masse à synchroniser, se traduit inévitablement par des efforts inacceptables de la part des organes mécaniques les plus sollicités lors de l'opération de changement de rapport, en particulier les cônes des de la part des organes mécaniques les plus sollicités lors de l'opération de changement de rapport, en particulier les cônes des synchroniseurs de la boîte de vitesses. L'implantation d'un DVA, dont le bénéfice est très appréciable pour les usagers, n'échappe donc pas à certaines contraintes, liées à la répartition des masses au sein du véhicule.

L'invention vise à augmenter le confort d'un véhicule automobile équipé d'un groupe moto-propulseur transversal fortement motorisé, grâce à l'adaptation d'un double volant amortisseur dans sa chaîne de transmission. Cette adaptation retient le principe d'une descente de mouvement du moteur sur la boîte. Elle permet de ne pas diminuer le rendement de la transmission par l'introduction d'un engrenage supplémentaire, sans pour autant augmenter de façon inconsidérée la masse d'inertie déterminant l'effort exercé par certains organes de la transmission lors de l'engagement d'une vitesse.

L'invention concerne un ensemble de transmission transversal à déport axial pour véhicule, comportant un élément élastique de liaison entre le moteur du véhicule et un premier organe de la transmission, un organe de transfert du mouvement de l'axe de sortie du moteur sur un axe parallèle à celui-ci, confondu avec l'arbre d'entrée du mécanisme de changement de vitesses, et un embrayage. Cet ensemble est caractérisé en ce que le premier organe en question est constitué par l'organe de transfert de mouvement, et en ce que l'embrayage est disposé sur l'arbre d'entrée du mécanisme de changement de vitesses, de sorte que la masse de l'organe de transfert intervient directement en tant que masse additionnelle dans un double volant amortisseur dont les éléments constitutifs sont respectivement le moteur, l'élément élastique et le l'organe de transfert.

Selon un mode de réalisation préféré de l'invention, l'organe de transfert du mouvement est constitué par une chaîne silencieuse.

Selon une autre caractéristique de l'invention, l'élément élastique de liaison comporte au moins un ressort de rigidité suffisante pour transmettre le couple moteur, et un organe de friction.

L'invention sera mieux comprise à la lecture de la description suivante d'un mode de réalisation particulier de celle-ci, en liaison avec les dessins annexés, sur lesquels :
- les figures 1A et 1B représentent respectivement la chaîne cinématique simplifiée d'une transmission montée "en bout" du moteur, sans et avec DVA,
- la figure 2A représente une première chaîne cinématique de transmission avec descente de mouvement du moteur sur la boîte de vitesses et DVA,
- la figure 2B représente la chaîne cinématique de transmission de l'invention,
- la figure 3 correspond à la figure 2A, et
- la figure 4 correspond à la figure 2B.

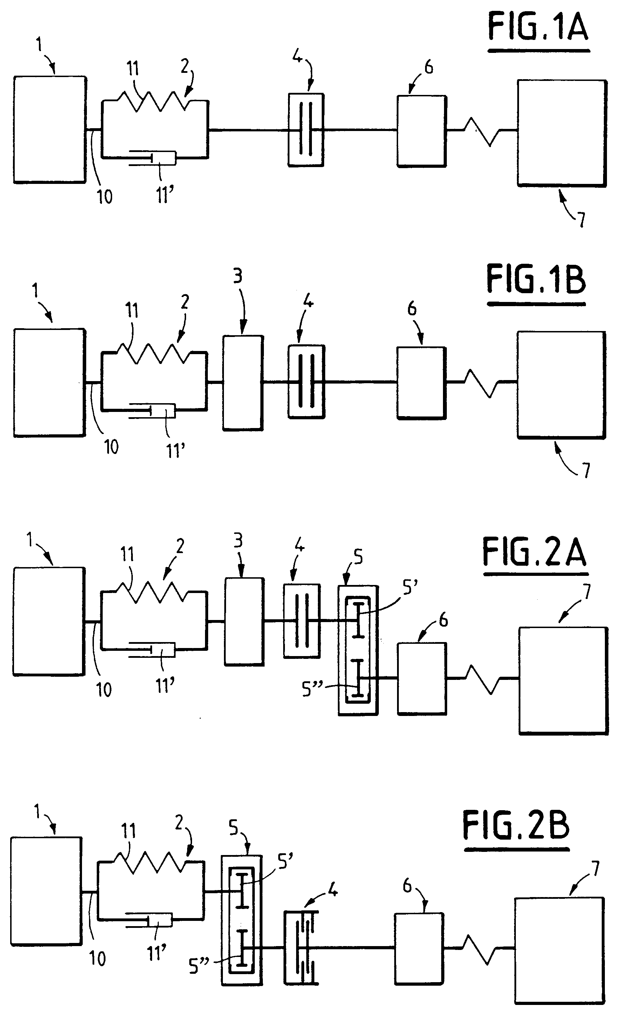

La chaîne cinématique de la figure 1A comporte une boîte de vitesses 6, montée sur l'axe de sortie d'un moteur 1, transversal ou non. En sortie de celui-ci, on trouve successivement un élément élastique 2, l'embrayage 4, la boîte de vitesses 6, et la masse du véhicule 7.

Sur la figure 1B, l'embrayage 4 est précédé d'une masse additionnelle 3. La chaîne cinématique comporte ici un DVA constitué par la succession dans cet ordre, de la masse du moteur 1, de l'élément élastique 2, et de la masse additionnelle 3. Comme indiqué plus haut, le volant bimasse ainsi réalisé est garant d'une Sur la figure 1B, l'embrayage 4 est précédé d'une masse additionnelle 3. La chaîne cinématique comporte ici un DVA constitué par la succession dans cet ordre, de la masse du moteur 1, de l'élément élastique 2, et de la masse additionnelle 3. Comme indiqué plus haut, le volant bimasse ainsi réalisé est garant d'une bonne isolation de la caisse et de l'habitacle, vis-à-vis des vibrations engendrées par les acyclismes du moteur.

La chaîne cinématique de la figure 2A comporte les mêmes éléments que celle de la figure 1B. Toutefois, ce schéma fait état d'un organe supplémentaire, à savoir la chaîne silencieuse de descente 5, du moteur 1, sur la boîte de vitesse 6. La chaîne 5 tourne autour de deux roues 5',5'' disposées respectivement sur l'axe de l'embrayage 4, et celui de l'arbre d'entrée 17 de la boîte de vitesses 6 (non représenté sur ce schéma).

Enfin, sur la figure 2B, représentant la chaîne cinématique d'un ensemble de transmission conforme à l'invention, la chaîne silencieuse 5 est disposée entre l'élément élastique 2, et l'embrayage 4.

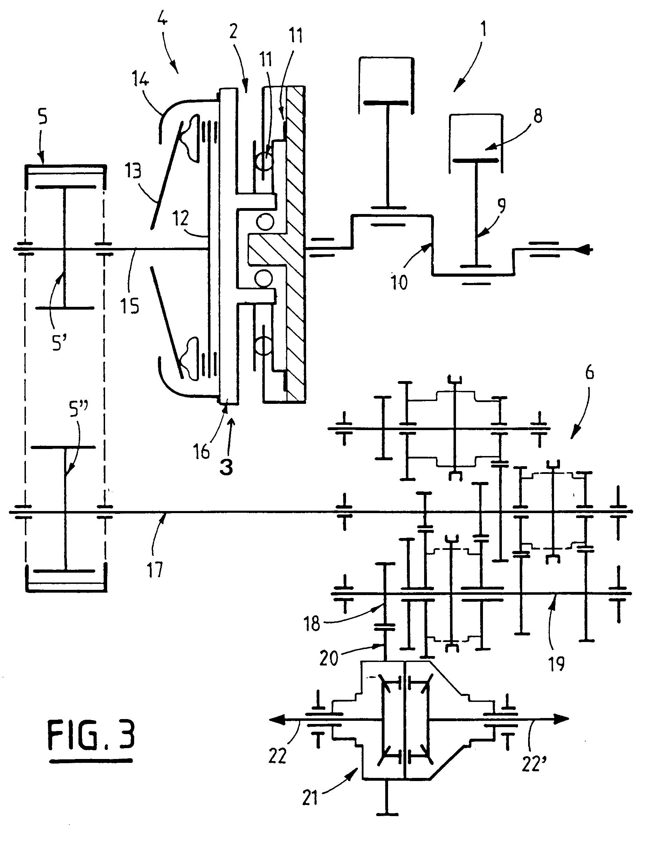

La figure 3, correspondant à la figure 2A, fait apparaître de façon volontairement simpliste le vilebrequin 10 du moteur 1, ainsi que deux pistons 8, et les bielles 9. Conformément à la figure 2A, l'ensemble de transmission est pourvu d'une masse additionnelle 3, solidaire du vilebrequin 10, et disposée entre le moteur 1, et l'embrayage 4. L'élément élastique 2 comporte au moins un ressort 11 suffisamment rigide pour transmettre le couple moteur au volant 16 de l'embrayage 4, et un organe de friction 11' amortissant les oscillations transmises par le vilebrequin. Sur la figure 3, on distingue également un disque 12 de l'embrayage 4, le diaphragme 13 et la cloche 14 de celui-ci. L'arbre mené 15 de l'embrayage 4 porte la roue d'entraînement 5' de la chaîne silencieuse 5, tandis que la roue 5'', actionnée par celle-ci, est solidaire en rotation de l'arbre d'entrée 17 de la boîte de vitesses 6. Au sein de la pignonnerie de la boîte de vitesses 6, on distingue un pignon 18, solidaire de l'arbre de sortie 19 de celle-ci, qui attaque la couronne 20 du différentiel 21, d'où sortent deux arbres d'entraînement de roue 22, 22'.

L'ensemble de transmission représenté sur la figure 3 présente une descente de mouvement du moteur 1, sur la boîte de vitesses 6. Cette descente de mouvement ne s'effectue pas par l'intermédiaire d'une paire de roues dentées, mais par un organe de transfert 5, tel qu'une chaîne silencieuse 5. De plus l'ensemble représenté sur la figure 3 se distingue de l'état de la technique par le fait qu'il est pourvu d'un DVA. Bien que satisfaisant sur le plan de la cinématique et sur celui de l'architecture générale de la transmission et du véhicule, un tel ensemble de transmission pose dans la pratique de sérieux problèmes de fonctionnement, tenant principalement au fait que la masse de la chaîne silencieuse 5, est disposée en sortie de l'embrayage 4. Cette masse, relativement importante, vient effectivement s'ajouter à la masse de la boîte 6, dans la masse d'inertie totale qui sollicite les organes d'engagement des vitesses, lors de la synchronisation.

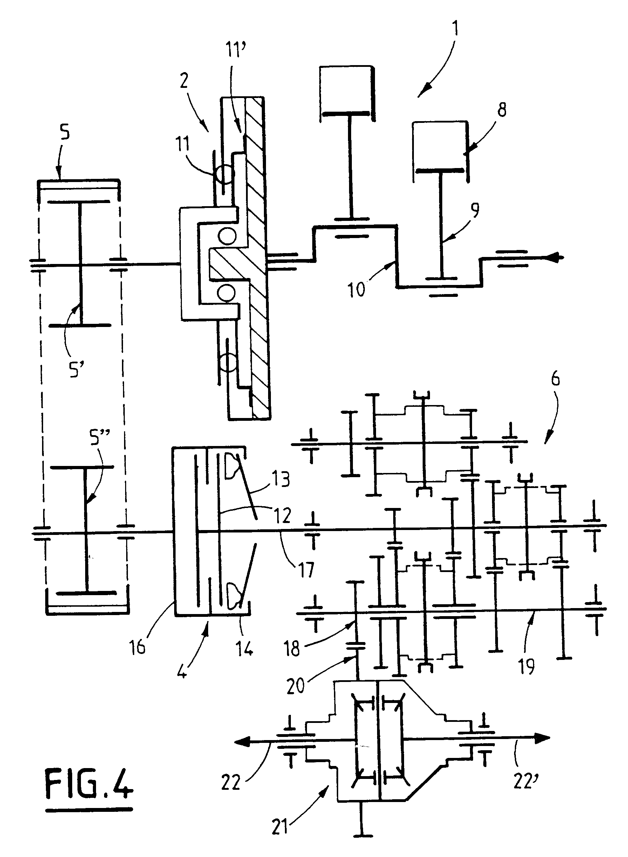

L'ensemble de transmission faisant l'objet de l'invention, et illustré par les figures 2B et 4, présente les mêmes éléments que les figures 2A et 3, à l'exception de la masse additionnelle 3, qui a pu être supprimée, en raison d'une disposition particulière de l'embrayage 4, et de la chaîne silencieuse 5. Conformément à l'invention, l'embrayage 4 est disposé sur le même axe que l'arbre d'entrée 17 de la boîte de vitesses 6. La chaîne silencieuse 5 est désormais placée entre le moteur 1 et l'embrayage 4. L'intérêt de cet agencement est double. D'une part la masse de la chaîne 5 ne sollicite pas les organes responsables de l'engagement des vitesses à chaque embrayage, et d'autre part cette masse intervient directement en tant que masse additionnelle dans un DVA, dont les éléments constitutifs sont respectivement, le moteur 1, l'élément élastique 2, et la chaîne silencieuse 5.

En conclusion, l'invention permet d'obtenir un ensemble de transmission pourvu d'une descente de mouvement silencieuse et amortissant les vibrations du moteur, sans recourir à l'implantation d'une masse d'inertie additionnelle dans sa chaîne cinématique ni augmenter la masse d'inertie de la boîte, en jeu lors de la synchronisation. Cette invention, simple à mettre en oeuvre, ne nécessite pas l'adaptation d'organes spécifiques. Elle permet de cumuler les avantages résultant de la souplesse d'une forte motorisation, du silence d'une descente de mouvement par chaîne, et du confort d'un DVA.

## Revendications

1. Ensemble de transmission transversal à déport axial pour véhicule, comportant un élément élastique (2) de liaison entre le moteur (1) du véhicule et un premier organe de la transmission, un organe de transfert du mouvement (5) de l'axe de sortie (10) du moteur (1) sur un axe parallèle à celui-ci, confondu avec l'arbre d'entrée (17) du mécanisme de changement de vitesses (6) et un embrayage (4), caractérisé en ce que le premier organe en question est constitué par l'organe de transfert de mouvement (5) et en ce que l'embrayage (4) est disposé sur l'arbre d'entrée (17) du mécanisme de changement de vitesses (6), de sorte que la masse de l'organe de transfert (5) intervient directement en tant que masse additionnelle dans un double volant amortisseur dont les éléments constitutifs sont respectivement le moteur (1), l'élément élastique (2) et l'organe de transfert (5).

2. Ensemble de transmission selon la revendication 1, caractérisé en ce que l'organe de transfert de mouvement (5) est constitué par une chaîne silencieuse.

3. Ensemble de transmission de mouvement selon la revendication 1 ou 2, caractérisé en ce que l'élément élastique de liaison (2) comporte au moins un ressort (11) de rigidité suffisante pour transmettre le couple moteur, et un organe de friction (11').

## Claims

1. Axially offset transverse transmission assembly for a vehicle, comprising an elastic element (2) for linking the engine (1) of the vehicle and a first member of the transmission, a member for transferring the movement (5) of the output axle (10) of the engine (1) to an axle parallel thereto, joining with the primary shaft (17) of the gear changing mechanism (6) and a clutch (4), characterised in that the first member in question is constituted by the member for transferring movement (5) and in that the clutch (4) is arranged on the primary shaft (17) of the gear changing mechanism (6) such that the mass of the transfer member directly acts as an additional mass in a double flywheel damper, the component members of which are, respectively, the engine (1), the elastic element (2) and the transfer member (5).

2. Transmission assembly according to claim 1, characterised in that the member for transferring movement (5) is constituted by a silent chain.

3. Assembly for transmission of movement according to claim 1 or 2, characterised in that the elastic linking element (2) comprises at least one spring (11) with sufficient rigidity to transfer the engine torque, and a friction member (11').

## Patentansprüche

1. Kraftübertragungsvorrichtung zum Quereinbau mit axialer Verschiebung für Fahrzeuge, umfassend ein elastisches Verbindungselement (2) zwischen dem Motor (1) des Fahrzeugs und einem ersten Organ der Kraftübertragung, ein Organ (5) zur Übertragung der Bewegung der Ausgangsachse (10) des Motors (1) auf eine Achse parallel zu derselben, die mit der Eingangswelle (17) der Gangwechselmechanik (6) zusammenfällt, und eine Kupplung (4), dadurch gekennzeichnet, daß das erste betreffende Organ durch das Organ (5) zur Übertragung der Bewegung gebildet wird, und daß die Kupplung (4) auf der Eingangswelle (17) der Gangwechselmechanik (6) angeordnet ist, so daß die Masse des Übertragungsorgans (5) direkt als zusätzliche Masse in einem Doppelschwungraddämpfer, dessen bestandteilbildende Elemente jeweils der Motor (1), das elastische Element (2) und das Übertragungsorgan (5) sind, wirkt.

2. Kraftübertragungseinheit nach Anspruch 1, dadurch gekennzeichnet, daß das Organ (5) zur Übertragung der Bewegung aus einer geräuscharmen Kette besteht.

3. Kraftübertragungseinheit nach Anspruch 1 oder 2, dadurch gekennzeichnet, daß das elastische Verbindungselement (2) zumindest eine Feder (11) mit ausreichender Steifigkeit zum Übertragen des Motormoments und ein Reiborgan (11') umfaßt.
